# EUROPEAN PATENT APPLICATION

(11) **EP 4 417 077 A1**
(43) Date of publication of application: **21.08.2024**
(21) Application number: 24158325.1
(22) Date of filing: 19.02.2024
(51) Int. Cl.: A42B 3/04, A42B 3/30

(54) **BATTERY POWERED HELMET**

(30) Priority: 17.02.2023 US 202363485678 P
(71) Applicant: Bombardier Recreational Products Inc., Valcourt, Québec J0E 2L0 (CA)
(72) Inventor: GAMACHE CAMIRE, Frederic, Sherbrooke, J1N 4B9 (CA); LAGOURGUE, Philippe, Magog, J1X 7K4 (CA); YERGEAU, Kevin, Drummondville, J2C 1S9 (CA); ROY, Michael, Racine, J0E 1Y0 (CA)
(74) Representative: Murgitroyd & Company

(57) **Abstract**

A helmet has: a helmet shell; a battery (52) connected to the helmet shell; an electric connector (54) connected to the helmet shell; and at least one electric device (60, 62, 64, 66) electrically connected to the battery and to the electric connector. In response to the electric connector (54) being electrically connected to an external power source (132) and receiving electric power for the external power source, electric power is supplied to the at least one electric device from the electric connector. In response to the electric connector not receiving electric power from the external power source, electric power is supplied to the at least one electric device from the battery (52).

## Description

### CROSS-REFERENCE

The present application claims priority to United States Provisional Application No. 63/485,678, filed February 17, 2023, the entirety of which is incorporated herein by reference.

### FIELD OF TECHNOLOGY

The present technology relates to helmets and specifically helmets having a battery.

### BACKGROUND

Helmets are a form of protective equipment used to protect the head of a wearer, including for riders of two- and three-wheeled vehicles, snowmobiles and off-road vehicles. Some helmets are electrified, with one or more electric devices installed therein. Such electric devices could be accessories such as heated visors, communication systems, flashlights, etc. Electric power is required to be delivered to such a helmet in order to power the electric devices. This is usually done by a power cord electrically connected between the helmet and a power source provided on the vehicle, such as the vehicle's battery.

When the wearer of the helmet get off of the vehicle, the power cord has to be disconnected from the helmet. As a result, the electric devices are no longer powered, which can be an inconvenience to the wearer of the helmet.

There is therefore a desire for a helmet that can power electric devices provided on the helmet even when the power cord is disconnected from the helmet.

### SUMMARY

It is an object of the present technology to ameliorate at least some of the inconveniences present in the prior art.

According to an aspect of the present technology, there is provided a helmet having: a helmet shell; a battery connected to the helmet shell; an electric connector connected to the helmet shell; and at least one electric device electrically connected to the battery and to the electric connector.. In response to the electric connector being electrically connected to an external power source and receiving electric power from the external power source, electric power is supplied to the at least one electric device from the electric connector; and in response to the electric connector not receiving electric power from the external power source, electric power is supplied to the at least one electric device from the battery.

In some embodiments, a visor is connected to the helmet shell.

In some embodiments, the at least one electric device comprises a visor heater connected to the visor.

In some embodiments, the at least one electric device comprises a light connected to the helmet shell.

In some embodiments, the light is pivotally connected to the helmet shell; and the light is pivotable between a stored position and a use position.

In some embodiments, in the stored position, the light is off; and in the use position, the light is on.

In some embodiments, a light switch is electrically connected between the light and the electric connector and between the light and the battery. The light switch is in an off position in response to the light being in the stored position. The light switch is in an on position in response to the light being in the use position.

In some embodiments, the light is pivotally connected to a lateral side of the helmet shell. In the use position the light faces toward a front of the helmet.

In some embodiments, in the stored position, the light is received in a recess in the helmet shell.

In some embodiments, the electric device comprises a rear light connected to a rear of the helmet shell.

In some embodiments, the electric device comprises a communication system.

In some embodiments, the communication system has: at least one earphone connected to the helmet shell; at least one microphone connected to the helmet shell; and at least one antenna connected to the helmet shell.

In some embodiments, the communication system also includes a control unit. The control unit is electrically connected to the battery and the electric connector. The control unit is configured for controlling a supply of electric power to the communication system.

In some embodiments, the communication system also has a multi-function switch assembly connected to the helmet shell.

In some embodiments, the battery is located in the rear portion of the helmet shell.

In some embodiments, the electric connector is connected to the back of the helmet shell.

In some embodiments, a control unit is electrically connected to the battery, the electric connector and the at least one electric device. The control unit is configured for controlling a supply of electric power to the at least one electric device. In response to the electric connector being electrically connected to the external power source and receiving electric power from the external power source, the electric connector is electrically connected to the battery by the control unit for recharging the battery.

In some embodiments, a battery housing houses the battery. The battery housing is connected to the helmet shell.

In some embodiments, the battery housing is connected to a lower, rear portion of the helmet shell.

In some embodiments, the battery housing has a charging port electrically connected to the battery.

In some embodiments, the charging port is a Universal Serial Bus Type-C (USB-C) connector.

In some embodiments, a control unit is electrically connected to the battery, the electric connector and the at least one electric device. The control unit being configured for controlling a supply of electric power to the at least one electric device.

For purposes of this application, terms related to spatial orientation such as front, rear, top, bottom, left, and right, are as they would normally be understood by a user of the object described, as oriented in standard usage. Terms related to spatial orientation when describing or referring to components or sub-assemblies of the helmet, separately from the helmet should be understood as they would be understood when these components or sub-assemblies are mounted to the helmet, unless specified otherwise in this application.

Embodiments of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects, and advantages of embodiments of the present technology will become apparent from the following description, the accompanying drawings, and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 is a front elevation view of a helmet;
Figure 2 is a right side elevation view of the helmet of Fig. 1;
Figure 3 is a left side elevation view of the helmet of Fig. 1;
Figure 4 is a bottom plan view of the helmet of Fig. 1;
Figure 5 is a rear elevation view of the helmet of Fig. 1;
Figure 6 is a right side elevation view of the helmet of Fig. 1 connected to a power cord with a light of the helmet in a stored position;
Figure 7 is a right side elevation view of the helmet of Fig. 1 connected to the power cord with the light of the helmet in a use position;
Figure 8 is a front elevation view of the helmet of Fig. 1 connected to the power cord with the light of the helmet in the use position;
Figure 9 is a top elevation view of the helmet of Fig. 1 connected to the power cord with the light of the helmet in the use position;
Figure 10 is a right side view of a snowmobile having a rider thereon, with the rider wearing the helmet of Fig. 1, and with the helmet connected to the power cord;
Figure 11 is a perspective view, taken from a rear left side, of part of an electrical system of the helmet of Fig. 1 showing the relative position of these components;
Figure 12 is a perspective view, taken form a rear left side, of the part of the electrical system of Fig. 11, with the battery housing shown exploded;
Figure 13 is a perspective view, taken from a rear, right side, of a light assembly of the helmet of Fig. 1, with the light in the use position;
Figure 14 is a left side view of the light assembly of Fig. 13, with the light in the use position;
Figure 15A is a schematic diagram of the electrical system of the helmet of Fig. 1 and of external components that connect to a helmet shell of the helmet;
Figure 15B is a schematic diagram of an alternative embodiment the electrical system of the helmet of Fig. 1 and of external components that connect to the helmet shell of the helmet;
Figure 15C is a schematic diagram of another alternative embodiment of the electrical system of the helmet of Fig. 1 and of external components that connect to the helmet shell of the helmet;
Figure 16 is a bottom plan view of an alternative embodiment of the helmet of Fig. 1;
Figure 17 is a bottom plan view of the helmet of Fig. 16 connected to a power cord;
Figure 18 is a perspective view of an end of the power cord of Fig. 17;
Figure 19 is a perspective view, taken from a rear, right side, of an alternative embodiment of the helmet of Fig. 1 connected to a power cord;
Figure 20 is perspective view, taken from a rear, right side, of a power unit of the helmet of Figure 19 and the power cord, with the power cord connected to the power unit;
Figure 21 is a left side elevation view of the power unit and the power cord of Figure 20, with the power cord disconnected to the power unit; and
Figure 22 is a perspective view, taken from a rear, left side, of another alternative embodiment of the helmet of Fig. 1 connected to a power cord.

Unless noted otherwise, figures may not be drawn to scale.

### DETAILED DESCRIPTION

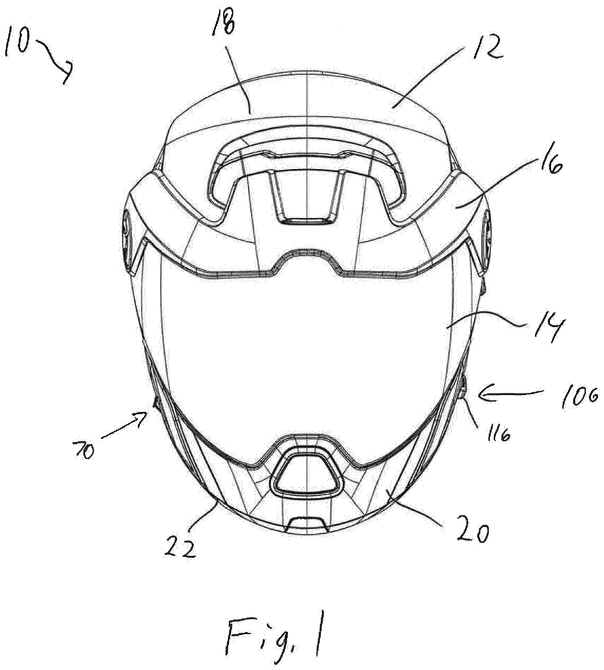

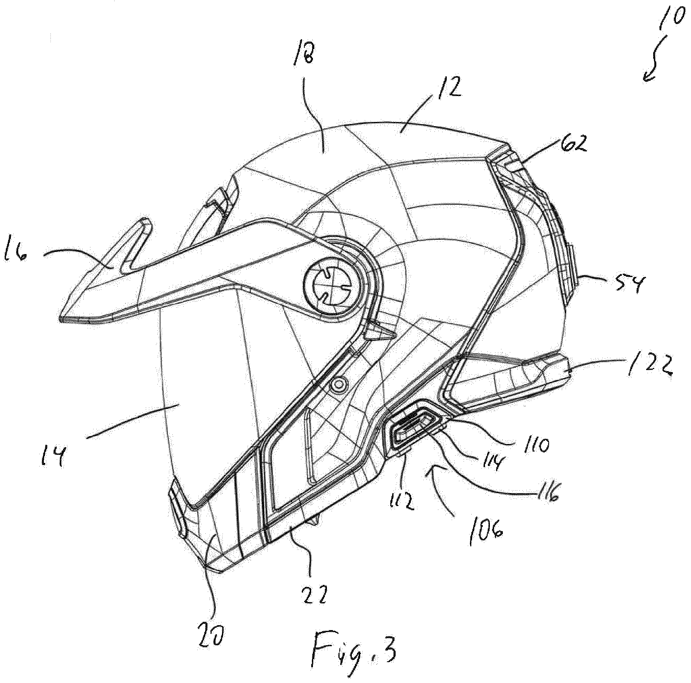

A helmet 10 in accordance with the present technology will be described with respect to Figs. 1 to 5. The helmet 10 has a helmet shell 12, a visor 14 and a peak 16.

The helmet shell 12 defines an inner volume configured to receive the head of the wearer of the helmet 10. The helmet shell 12 includes a crown portion 18 configured to generally cover a top and rear of the head of the wearer. The helmet shell 12 also includes a jaw shield portion 20 integrally connected to the crown portion 18. The jaw shield portion 20 is positioned and shaped to extend around and in front of a jaw area of the wearer of the helmet 10 thereby shielding it, as its name suggests. It is contemplated that in some embodiments, the jaw shield portion 20 could be movable and/or removable. It is also contemplated that in some embodiment, the jaw shield portion 20 could be omitted.

The helmet shell 12 further includes a bottom trim 22. The bottom trim 22 forms the bottom side of the helmet shell 12 (oriented in standard wearing position) and is disposed generally opposite the crown portion 18.

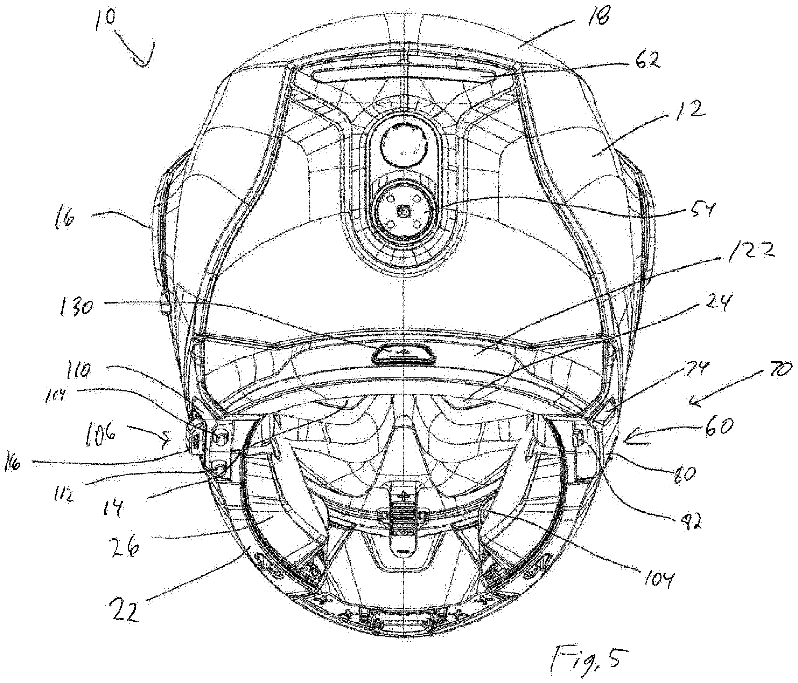

The crown portion 18 and the jaw shield portion 20 define an aperture 24 (partially shown in Fig. 5) positioned in front of where a face of the wearer would be when wearing the helmet 10. The aperture 24 is closed by the visor 14. In the present embodiment, the visor 14 is pivotally connected to the helmet shell 12. It is contemplated that in some embodiments, the visor 14 could be removable or omitted. The peak 16 is connected to the visor 14 and pivots with the visor 14. It is contemplated that the peak 16 could pivot independently of the visor 14. It is contemplated that the peak 16 could alternatively be connected pivotally or fixedly to the helmet shell 12. It is also contemplated that the peak 16 could be omitted.

The helmet 10 also has a cushioning layer 26 provided on the insider of the helmet shell 12. The cushioning layer 26 provides comfort, thermal insulation and shock absorption. In some embodiments, the cushioning layer 26 is made from a soft cushioning material should expanded polystyrene (EPS) foam, but other materials are contemplated.

The helmet 10 also has a chin strap (not shown) connected to the helmet shell 12.

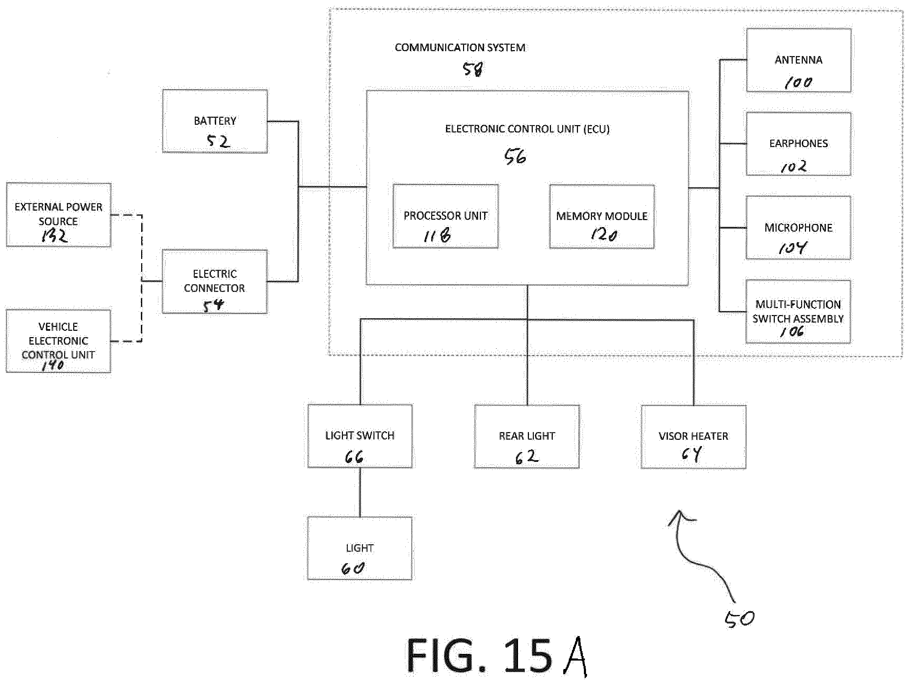

The helmet 10 also has an electrical system 50. The electrical system 50 will be briefly described with reference to Fig. 15A. A more detailed description of the various components of the electrical system 50 will be described further below.

The electrical system 50 has multiple electric devices that are powered via a battery 52 or an electric connector 54. The supply of electric power to the electric devices is controlled by an electronic control unit (ECU) 56 as will be described in more detail below. The battery 52 and the electric connector 54 are both connected to the ECU 56. The electric devices include a communication system 58, a light 60, a rear light 62 and a visor heater 64. As can be seen, in the present embodiment, the ECU 56 is part of the communication system 58. It is contemplated that in other embodiments, the ECU 56 could be separate from the communication system 58 or could have one portion separate from the communication system 58 and one portion forming part of the communication system 58. It is contemplated that in other embodiments, the helmet 10 could have only some or only one of the above electric devices, additional electric devices and/or different electric devices. For example, in embodiments where the helmet 10 has no visor 14, a visor heater 64 would not be provided. As can be seen, a light switch 66 is electrically connected between the ECU 56 and the light 60.

The visor heater 64 includes a visor heating element (not shown) attached to the inner portion of the visor 14. The heating element when operating, heats the visor 14 and discourages water and frost from forming on the inner portion of the visor 14. An upper connector (not shown) is attached about the upper edge of the inner portion of the visor 14, and a lower connector (not shown) is attached about the lower edge of the inner portion of the visor 14. The connectors are electrically connected to the ECU 56 to receive power from the battery 52 or the electric connector 54 via the ECU 56. The heating element establishes an electrical connection between the upper connector and the lower connector, thereby heating the inner portion of the visor 14. It is contemplated that the connectors could alternatively be connected to the right edge and left ledge of the inner portion of the visor 14, or on the same edge of the inner portion of the visor 14.

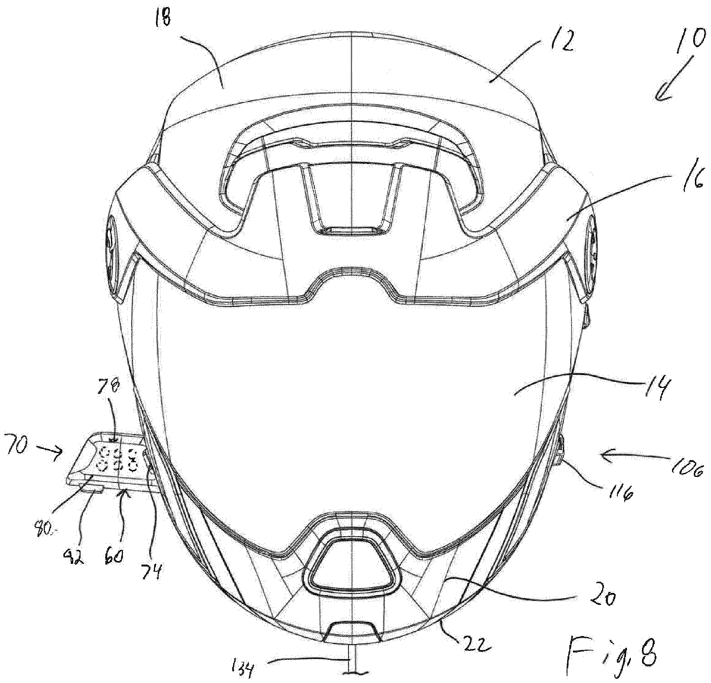

With reference to Figs. 8, 13 and 14, the light 60 will be described in more detail. The light 60 is connected to a lateral side of the helmet shell 12. More specifically, the light 60 is pivotally connected to a right side of the helmet shell 12 via a mounting plate 68 that is mounted to the bottom trim 22 on the right side of the helmet shell 12. The mounting plate 68 has upper and lower tabs 69 used to attach the mounting plate 68 to the bottom trim 22. The light 60 and mounting plate 68 form part of a light assembly 70. It is contemplated that the mounting plate 68 could be mounted to the bottom trim 22 on the left side of the helmet shell 12, such that the light 60 is on the left side of the helmet 10. It is also contemplated that the mounting plate 68 could be mounted elsewhere on the helmet shell 12 such as, but not limited to, left and right sides of the crown portion 18, a top of the crown portion 18, and to the peak 16.

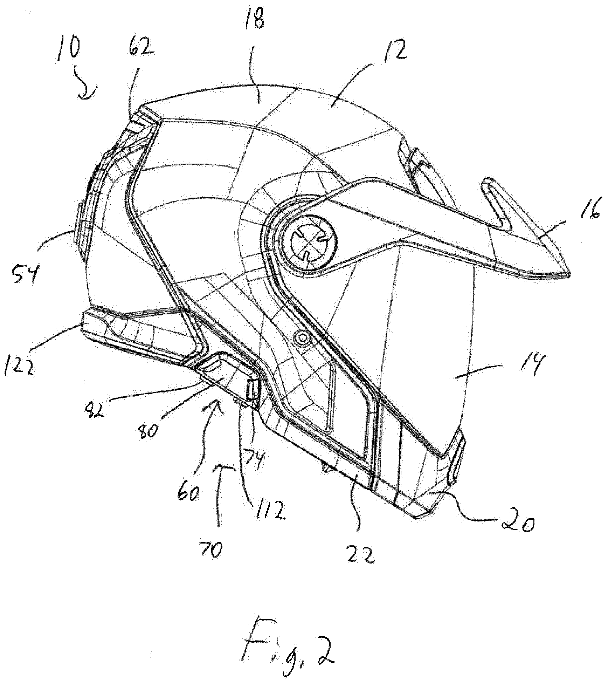

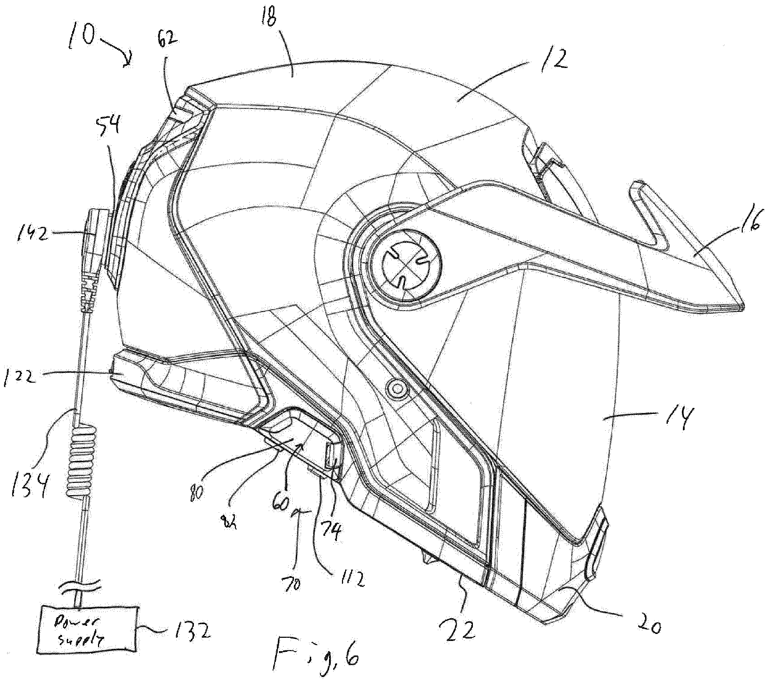

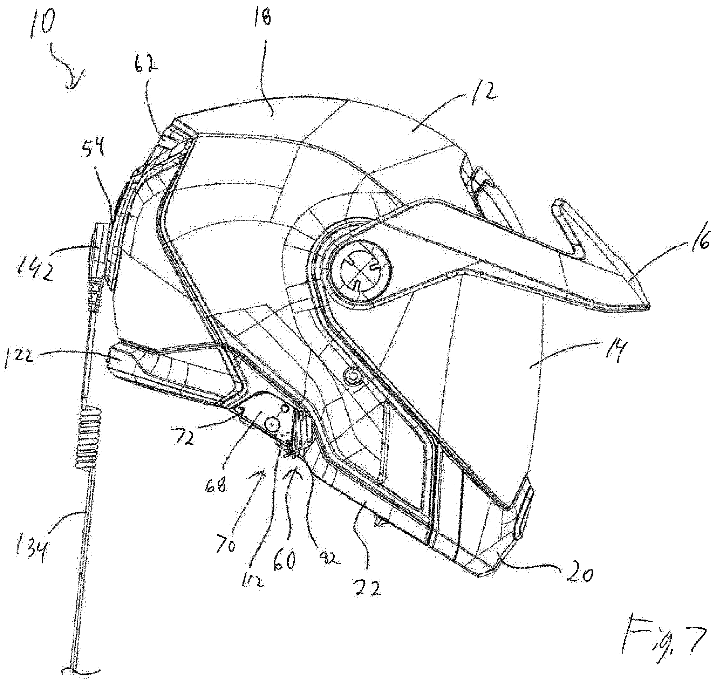

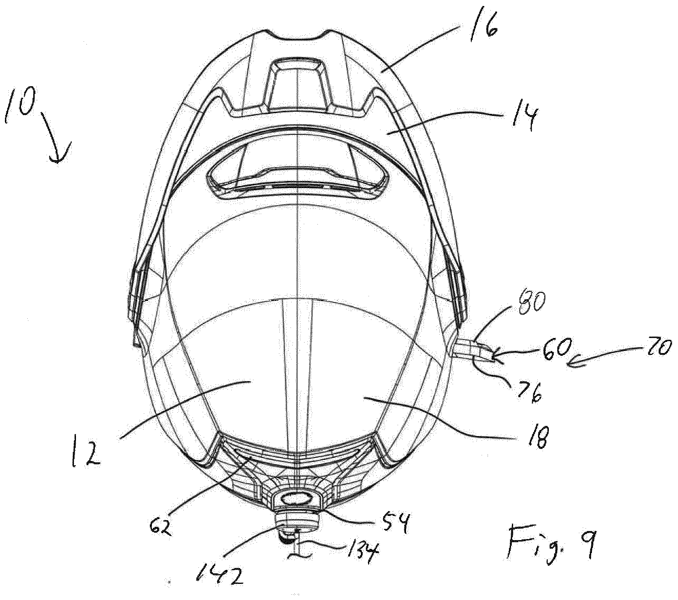

The light 60 is pivotable between a stored position (shown in Figs. 2 and 4 to 6) and a use position (shown in Figs. 7 to 9, 13 and 14). In the stored position, the light 60 is received in a recess 72 in the bottom trim 22 of the helmet shell 60 and rests against the mounting plate 68. The mounting plate 68 is in the recess 72. It is contemplated that in some embodiments, the recess 72 could be omitted. In the use position, the light 60 faces toward a front of the helmet 10 so as to illuminate objects in the direction in which the head of the wearer of the helmet 10 is turned. In the present embodiment, the stored and use positions are 110 degrees relative to each other, but it is contemplated that this angle could be anywhere between 80 and 140 degrees in other embodiments.

The light assembly 70 also includes a hinge 74 connected to the front portions of the light 60 (with respect to the position of the light 60 in the stored position) and of the mounting plate 68. The light 60 pivots about the hinge 74 between the stored and use positions. It is contemplated that the mounting plate 68 could be omitted such that the hinge 74 pivotally connects the light 60 directly to the helmet shell 12 or to a suitable bracket mounted to the helmet shell 12.

The light 60 includes a panel 76. An array of white light emitting diodes (LEDs) 78 (Fig. 8) is mounted to the panel 76. A lens 80 is mounted to the panel 76 such that the LEDs 78 are housed between the panel 76 and the lens 80. It is contemplate that a light source other than the LEDs 78 could be used. A tab 82 extends from a lower edge of the lens 80 facilitate the pivoting of the light 60 from the stored position to the use position by the wearer of the helmet 10.

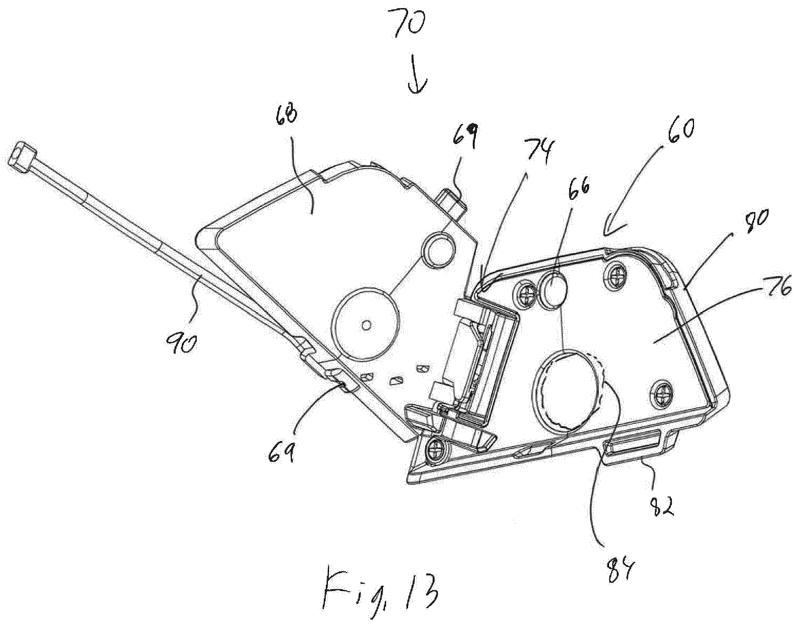

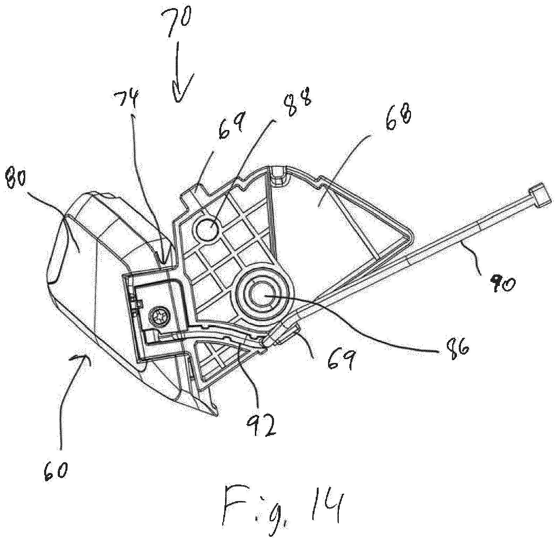

A magnet 84 (Fig. 13) is connected to the panel 76 and is disposed between the panel 76 and LEDs 78. Another magnet 86 (Fig. 14) is connected to the mounting plate 68 and is positioned in alignment with the magnet 84 when the light 60 is in the stored position. The magnets 84, 86 are disposed such that they attract each other when the light 60 is in the stored position. The magnets 84, 86 keep the light 60 in the stored position until a sufficient force is applied to the light 60, via the tab 82 for example, to overcome the magnetic force between the magnets 84, 86. The hinge 74 is spring-loaded such that once the magnetic force between the magnets 84, 86 is overcome, the hinge 74 pivots the light 60 to the use position. The spring-loaded hinge 74 keeps the light 60 in the use position. By applying a force to the light 60 that is sufficient to overcome the spring force of the hinge 74, the light 60 pivots from the use position toward the stored position, and once the light 60 is sufficiently pivoted such that the magnets 84, 86 attract each other, the light 60 is moved to and held in the stored position.

The light switch 66 is electrically connected between the LEDs 78 and the ECU 56. The switch 66 is positioned so as to be actuated by the pivoting of the light 60. Pivoting the light 60 to the stored position puts the switch 66 in an off position. Pivoting the light 60 to the use position puts the switch 66 in an on position. As a result, when the light 60 is pivoted to the stored position, the light 60 is automatically turned off, and when the light 60 is pivoted to the use position, the light is automatically turned on.

In the present embodiment, the switch 66 is a hall effect switch 66 connected to the panel 76 (see Fig. 13). A magnet 88 (Fig. 14) is connected to the mounting plate 68 in alignment with the hall effect switch 66 when the light 60 is in the stored position. When the light 60 is in the stored position, the hall effect switch 66 is placed in an off position by the magnetic field of the magnet 88. When the light 60 is in the use position, the hall effect switch 66 is placed in an on position due to the absence of the effect of the magnetic field of the magnet 88. It should be noted that the magnet 84 is positioned sufficiently far from the hall effect switch 66 so as to not have an effect of the operation of the hall effect switch 66. It is contemplated that the switch 66 could be another type of switch, such as, but not limited to, a pressure switch that is depressed when the light 60 is pivoted to the stored position. It is also contemplated that the switch 66 could not be actuated by the pivoting of the light 60, such that the light 60 does not automatically turn on and off, but instead requires the manual actuation of the switch 66 by the wearer of the helmet 10.

The switch 66 is electrically connected to the ECU 56 by an electrical cable 90 that extends through the hinge 74 and is received in part in a recess 92 in the left side of the mounting plate 68 as can be seen in Fig. 14.

It is contemplated that other types of light 60 could be provided on the helmet 10. For example, it is contemplated that one or more forwardly facing lights could be fixedly mounted on the jaw shield portion 22, the peak 16 and/or the front part of the crown 18. It is also contemplated that the light 60 could be a flashlight mounted to the helmet shell 12. It is contemplated that such a flashlight could have its own battery, thereby allowing it to be removed from the helmet 10 and used independently of the helmet 10, and that the battery of the flashlight would be recharged when it is connected to the helmet 10. It is also contemplated that more than one light 60 and that more than one type of light could be provided on the helmet 10.

The rear light 62 is connected to the rear of the crown portion 18 of the helmet shell 12. As best seen in Fig. 5, the rear light 62 is disposed above the electric connector 54. The rear light 62 is a red colored light intended to be visible by riders of vehicles following the vehicle which the wearer of the helmet 10 is riding. When the rear light 62 is powered by the battery 52, the rear light 62 is constantly on, or alternatively the rear light 62 could strobe. When the rear light 62 is powered from the electric connector 54, the rear light 62 turns on or strobes in response to a brake of the vehicle being driven by the wearer of the helmet 10 being actuated. Alternatively, the rear light 62 could be on when the brake of the vehicle is not actuated and could strobe when the brake of the vehicle is actuated. As will be explained below, this is possible since the electric connector 54 can transmit both electric power and control signals from the vehicle to the ECU 56, and the ECU 56 can use these control signals to control the rear light 62. It is contemplated that in embodiments where the electric connector 54 does not transmit control signals, the rear light 62 would be controlled in the same way as when it is powered by the battery 52. It is also contemplated that the ECU 56 could communicate wirelessly with the vehicle such that the rear light 62 would be controlled in the same way as when it is powered by the electric connector 54 in response to vehicle control signals received by the ECU 56. The rear light 62 is operated as described above when the ECU 56 is powered. It is contemplated that a switch could be used to turn off the rear light 62 when it does not need to be used. It is also contemplated that a photosensitive cell could be provided on the helmet 10 to cause the rear light 62 to turn on when the environment in which the helmet 10 is being used gets dark.

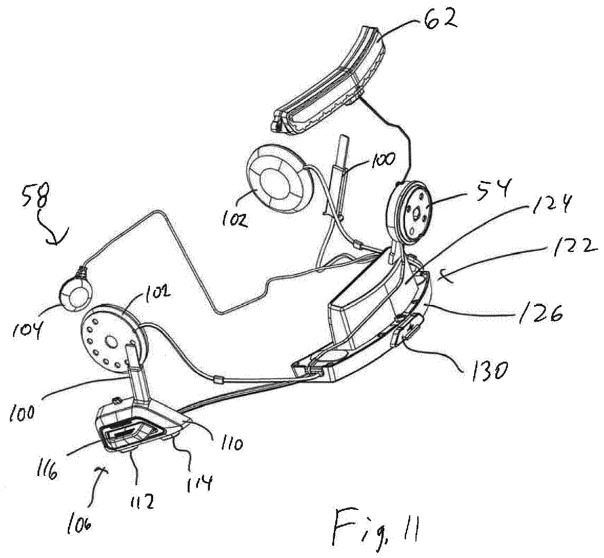

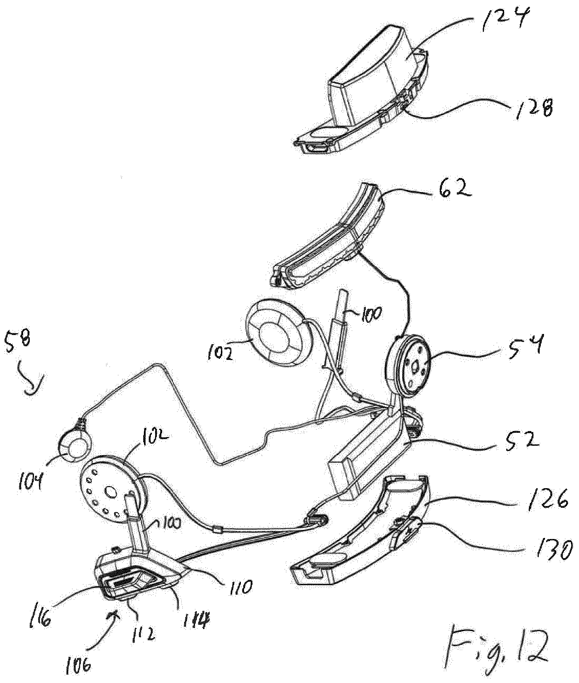

Turning now to Figs. 11 and 12, the communication system 58 will be described. As described above the communication system 58 includes the ECU 56. The communication system 58 also includes left and right antennas 100, left and right earphones 102, a microphone 104 and a multifunction switch assembly 106.

The antennas 100 are located on the left and right sides of the helmet 10, between the helmet shell 12 and the cushioning layer 26. The left antenna 100 is mounted to the multi-function switch assembly 106. The right antenna 100 is mounted to the mounting plate 68. The antennas 100 are configured to receive and/or transmit wireless signals. These include, but are not limited to, one or more of radio broadcasting signals, Bluetooth^{™} signals, Wi-Fi^{™} signals, cellular network signals (i.e. 3G, 4G, 5G for example), and citizen band (CB) radio signals. It is contemplated that the left and right antennas could be configured to receive and/or transmit wireless signals that are different from each other. The signals received and/or transmitted by the antennas 100 are sent to and/or received from the ECU 56.

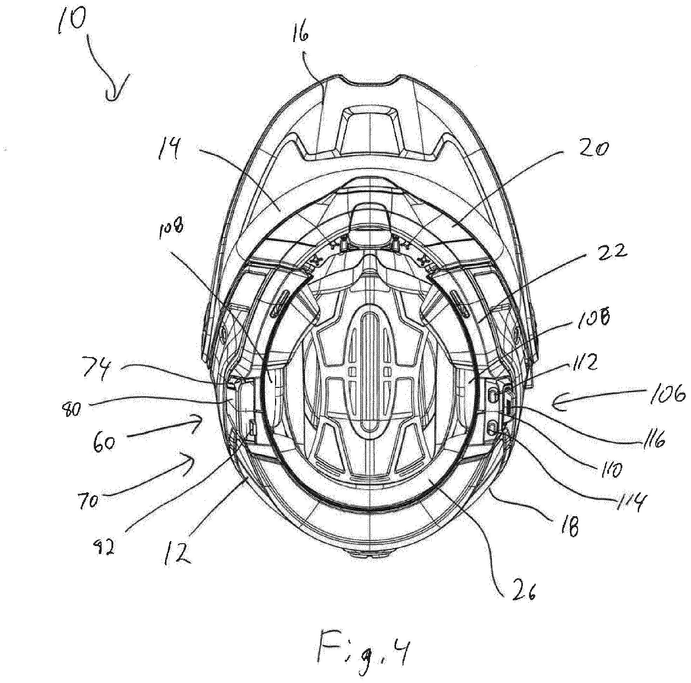

The headphones 102 are connected to the inside of the helmet shell 12 at locations that are generally aligned with the ears of a person wearing of the helmet 10. Ear cushions 108 (Figs. 4, 5) are placed over the headphones 102 to cup the ears of a wearer of the helmet 10 to provide comfort to the wearer of the helmet 10 and to partially shield outside noise. It is contemplated that only one headphone 102 could be provided. The headphones 102 are electrically connected to the ECU 56 to receive signals from the ECU 56 and transform these signals into sound.

The microphone 104 is connected to the helmet shell 12 on the inside of the jaw shield portion 20, as can be seen in Fig. 5. The microphone 104 is disposed on the right side of the jaw shield portion 20 so as to be located near a mouth of a wearer of the helmet 10. It is contemplated that the microphone 104 could be disposed on the left side or in the center of the jaw shield portion 20. The microphone transforms the voice of the wearer of the helmet 10 into signals that are transmitted to the ECU 56.

The multi-function switch assembly 106 is connected to the left side of the helmet shell 12. More specifically, the multi-function switch assembly 106 is positioned in a recess defined in the left side of the bottom trim 22 of the helmet shell 12 at a location generally opposite to the light 60. It is contemplated that the multi-function switch assembly 106 could be located elsewhere on the helmet 10. The multi-function switch assembly 106 has a housing 110. The ECU 56 is housed inside the housing 110. The multi-function switch assembly 106 also has two buttons 112, 114 on a lower side of the housing 110 and a switch 116 on the left side of the housing 110. The switch 116 can be moved up, moved down and can be pressed in (i.e. pressed toward the right). The buttons 112, 114 and the switch 116 are connected to the ECU 56 to send signals to the ECU 56. The position of the buttons 112, 114 and of the switch 116 are interpreted by ECU 56 as different commands to be carried out. Combined actuations of the buttons 112, 14 and of the switch 116 as well as the amount of time for which they are actuated are also interpreted by ECU 56 as different commands to be carried out. For example, pressing the switch 116 up or down causes the ECU 56 to increase or lower, respectively, the volume of the sound coming out of the headphones 102. As another example, a short press in of the switch 116 can mute or unmute the microphone 104, or can accept a call received by a cellphone linked to the ECU 56 via Bluetooth^{™}, and a long press of the switch 116 can end such a call. As another example, a short press of the button 112 can turn on or off an intercom function. As another example, a long press of the button 114 can enter a configuration mode. As another example, a combined short press of the button 114 and short down press of the switch 116 can turn the electrical system 50 on or off. Other functionalities and combinations of presses are contemplated.

As shown in Figure 15A, the ECU 56 has a processor unit 118 for carrying out computer executable instructions, and a non-transitory memory module 120 that stores the computer executable instructions in a non-transitory medium (not shown) included in the memory module 120. The processor unit 118 includes one or more processors for performing processing operations that implement functionalities of the ECU 56. The processor unit 118 may be a general-purpose processor or may be a specific-purpose processor comprising one or more preprogrammed hardware or firmware elements (e.g., application-specific integrated circuits (ASICs), electrically erasable programmable read-only memories (EEPROMs), etc.) or other related elements. The non-transitory medium of the memory module 120 may be a semiconductor memory (e.g., read-only memory (ROM) and/or random-access memory (RAM)), a magnetic storage medium, an optical storage medium, and/or any other suitable type of memory. While the ECU 56 is represented as being one entity in this implementation, it is understood that the ECU 56 could comprise separate entities for controlling components separately. For example, the ECU 56 could include one entity disposed in the housing 110 of the multi-function switch assembly 106 dedicated to the control of the communication system 58 and one or more other entities disposed elsewhere on the helmet to control the light 60, the rear light 62, the visor heater 64 and the supply of power to the various components of the helmet 10.

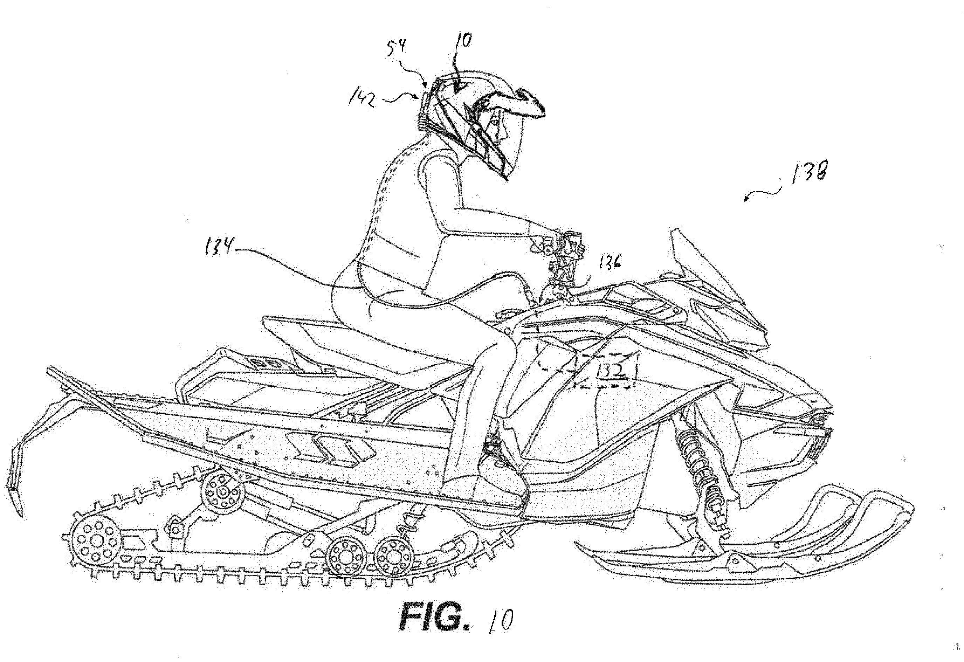

With reference to Figs. 10 and 11, the battery 52 is located in a rear portion of the helmet shell 12, in a battery housing 122. The battery housing 122 includes an upper portion 124 and a lower portion 126. The battery housing 122 is connected to a rear portion of the bottom trim 22 of the helmet shell 12, as can be seen in Fig. 5, thereby connecting the battery 52 to the helmet shell 12. The upper portion 124 of the battery housing 122 defines a charging port 128 (Fig. 12) electrically connected to the battery 52. The charging port 128 allows for convenient recharging of the battery 52 when the helmet 10 is not being used by allowing connection of the battery to a power outlet, such as a residential power outlet. In the present embodiment, the charging port 128 is a Universal Serial Bus Type-C (USB-C) connector, but other types of charging ports are contemplated. The aperture of the charging port 128 is aligned with an aperture (not shown) defined in the lower portion 126 of the battery housing 122. A silicone plug 130 is connected to the lower portion 126 of the battery housing 122 to selectively plug the aperture of the charging port 128 to prevent entry of liquid, snow and dirt in the charging port 128 when the battery 52 is not being recharged via the charging port 128. The battery 52 is electrically connected to the ECU 56 to selectively supply electric power to the ECU 56 and to the above-described electric devices via the ECU 56. In the present embodiment, the battery 52 is a 3.7 Volt, 1.5 Amp/hour, lithium-ion rechargeable battery, but other types of batteries are contemplated. For example, it is contemplated that three AAA rechargeable batteries could be used.

The electrical connector 54 is connected to the back of the helmet shell 12 and is laterally centered on the helmet shell 12. The electric connector 54 is electrically connected to the ECU 56. As shown in Fig. 15A, the electric connector 54 can be connected to an external power source 132 to receive electric power from the external power source 132 which can then be selectively supplied to the ECU 56 and to the above-described electric devices via the ECU 56. As shown in Fig. 10, in one embodiment, the electric connector 54 is connected by a power cord 134 to a power outlet 136 of a snowmobile 138. The power outlet 136 is electrically connected to the battery of the snowmobile 138, which in this embodiment is the external power source 132. The battery of the snowmobile 138 is recharged by a generator (not shown) driven by an internal combustion engine (not shown) of the snowmobile 138 as the snowmobile 138 operates. It is contemplated that the external power source 132 could alternatively be the generator of the snowmobile 138 (or other vehicle operated by the wearer of the helmet 10), or a battery provided for this purpose on the vehicle or in a garment of the wearer of the helmet 10. The electric connector 54, the power cord 134 and the power outlet 136 also electrically connect the ECU 56 of the helmet 10 with the vehicle ECU 140 so that signals relating to the operation of the vehicle can be transmitted to the ECU 56 which can then control one or more of the above described electric devices of the helmet 10 in response for these signals. For example, as explained above, the ECU 52 can control operation of the rear light 62 in response to the actuation of the brake of the vehicle which generates a brake signal that is transmitted from the vehicle ECU 140 to the ECU 56 of the helmet 10. It is contemplated that signals could be transmitted wirelessly from the vehicle ECU 140 to the ECU 56 of the helmet 10. It is also contemplated that the ECU 56 of the helmet 10 could transmit signals to the vehicle ECU 140 via the power cord 134 or wirelessly. It is also contemplated that the vehicle ECU 140 end the ECU 56 of the helmet 10 could not be connected to each other and that no signal is transmitted therebetween. In the present embodiment, the electric connector 54 is similar to the receiver described in United States Patent No. 11, 266,198, issued March 8, 2022, the entirety of which is incorporated herein by reference, and as such the electric connector 54 will not be described in detail herein. It is contemplated that the electric connector 54 could be another type of electric connector. The power cord 134 includes an electric connector 142 at one end thereof that is configured to connect to the electric connector 54 and to transfer electric power therebetween. In the present embodiment the power cord 134 and the electric connector 142 are similar to the electrical connector assembly and the connector, respectively, described in United States Patent No. 11, 266,198, and as such the power cord 134 and the electric connector 142 will not be described in detail herein. It is contemplated that the power cord 134 could be another type of power cord suitable for connection to the electric connector 54.

As previously described, the electric devices of the helmet are powered via the battery 52 or the electric connector 54. The ECU 56 is configured for controlling the supply of electric power to the above described electric devices (i.e. the communication system 58, the light 60, the rear light 62 and the visor heater 64) based on whether or not the electric connector 54 is electrically connected to the external power source 132 and receives electric power from the external power source. The computer executable instructions stored on the memory module 120 of the ECU 56, when executed, control the supply of electric power.

In response to the electric connector 54 being electrically connected to the external power source 132 and receiving electrical power from the external power source 132, the ECU 56 controls the supply of electric power such that electric power is supplied to the electric devices of the helmet 10 from the electric connector 54 and not from the battery 52. In some embodiment, in response to the electric connector 54 being electrically connected to the external power source 132 and receiving electrical power from the external power source 132, the ECU 56 connects the electric connector 54 to the battery 52 to supply electric power from the electric connector 54 to the battery 52 in order to recharge the battery 52. The ECU 56 disconnects the electric connector 54 from the battery 52 when the battery 52 is fully charged. In such embodiment, it is contemplated that the ECU 56 would only connect the electric connector 54 to the battery 52 to supply electric power from the electric connector 54 to the battery 52 in order to recharge the battery 52 only if the electric devices of the helmet 10 use less than a maximum power that can be supplied from the electric connector 54, or use less than a predetermined amount of power from the electric connector 54, or use no power from the electric connector 54.

In response to the electric connector 54 not receiving electric power from the external power source 132, the ECU 56 controls the supply of electric power such that electric power is supplied to the electric devices of the helmet 10 from the battery 52. This allows the electric devices of the helmet 10 to operate without the need of the external power source 132. The electric connector 54 could not receive electric power from the external power source 134 at least because the power cord 134 is not connected to the electric connector 54, the power cord 134 is connected to the electrical connector 54 but not to the external power source 132, the power cord 134 is not properly connected to the connector 54 or to the external power source 132, or the power cord 134 is properly connected to the connector 54 and to the external power source 132 but the external power source 132 cannot supply electric power. The external power source 132 could no be able to supply electric power at least because the external power source 132 is in a vehicle and the vehicle is not operating, or the external power source 132 is an external battery and this battery is fully discharged.

In the above embodiment, the control of the supply of electric power to the electric devices is achieved by the ECU 54 executing computer executable instructions stored on the memory module 120. However, it is contemplated that the control of the supply of electric power to the electric devices could achieved by a different type of control unit. For example, the control unit, or at least the portion of the control unit in charge of controlling the supply of electric power, could be a printed circuit board having solid state relays (SSRs). In such an embodiment, in response to the electric connector 54 being electrically connected to the external power source 132 and receiving electrical power from the external power source 132, the SSRs make an electric connection between the electric connector 54 and the electric devices and break an electric connection between the battery 52 and the electric devices; and in response to the electric connector 54 not receiving electric power from the external power source 132, the SSRs break the electric connection between the electric connector 54 and the electric devices and make the electric connection between the battery 53 and the electric devices.

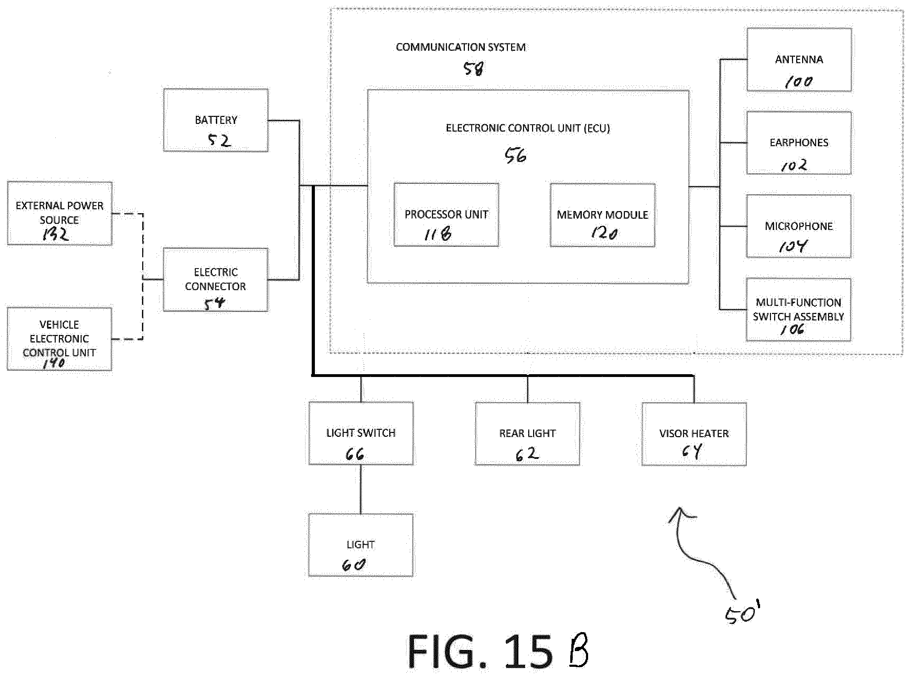

An electrical system 50', which is an alternative embodiment of the electrical system 50, will now be described with reference to Fig. 15B. For simplicity, elements of the electrical system 50' that are the same as or similar to those of the electrical system have been labeled with the same reference numerals and will not be described again. In the electrical system 50', the rear light 62, the visor heater 64, and the light switch 66 are electrically connected to the battery 52 and the electric connector 54 directly. These electric devices are not electrically connected to the battery 52 and the electric connector 54 via the ECU 56 as is the case in the electrical system 50.

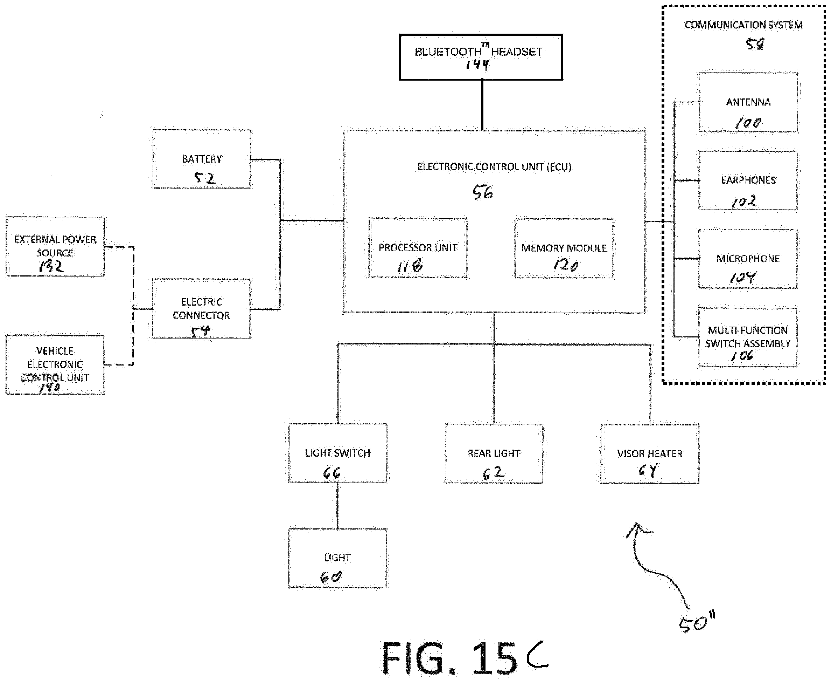

An electrical system 50", which is an alternative embodiment of the electrical system 50, will now be described with reference to Fig. 15C. For simplicity, elements of the electrical system 50" that are the same as or similar to those of the electrical system have been labeled with the same reference numerals and will not be described again. In the electrical system 50", the ECU 56 is separate from the communication system 58. A Bluetooth^{™} headset 144 is electrically connected to the ECU 56 which controls the supply of electric power from the battery and the electric connector 54 to the headset 144. It is contemplated that the headset 144 could be provided in addition to or instead of the communication system 58. The headset 144 is connected inside the helmet shell 12. The electric system 50" is a modular electric system 50". The user of the helmet 10 having the modular electric system 50" only installs on the helmet 10 the ones of electric devices that are desired. This allows the user to initially purchase a "basic" helmet having only one or two of the electric devices shown in Fig. 15C and to later upgrade the helmet 10 by adding more of the electric devices. Additionally, it is contemplated that the user could change an electric device for another electric device of the same type but providing different functionalities and/or having a different design. For example, the user could change the rear light 62 for a different type of rear light that has a different shape and/or light pattern. It is also contemplated that the ECU 56 could be omitted if the electric devices provided on the helmet 10 do not require the ECU 56. For example, if the helmet 10 is only provided with the light 60 and the rear light 62, the ECU 56 could be omitted and the light switch 66 the rear light 62 would be electrically connected to the battery 52 and the electric connector 54 directly. The user could later elect to add the ECU 56 to provide additional functionalities to the light 60 and the rear light 62, such as causing the rear light 62 to turn on or strobe in response to a brake of the vehicle being driven by the wearer of the helmet 10 being actuated. Once the ECU 56 has been added to the helmet 10, the communication system 58 and/or the headset 144 could also be added.

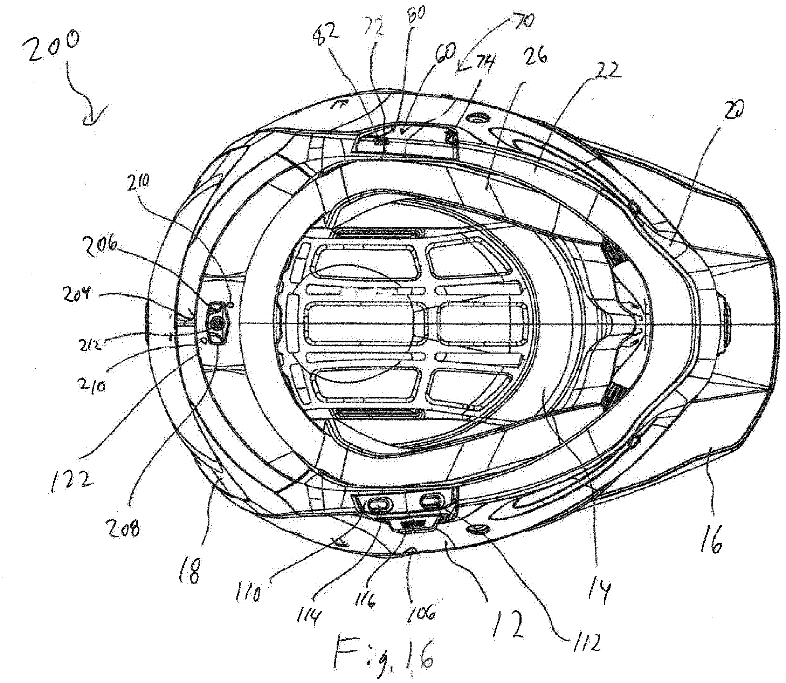

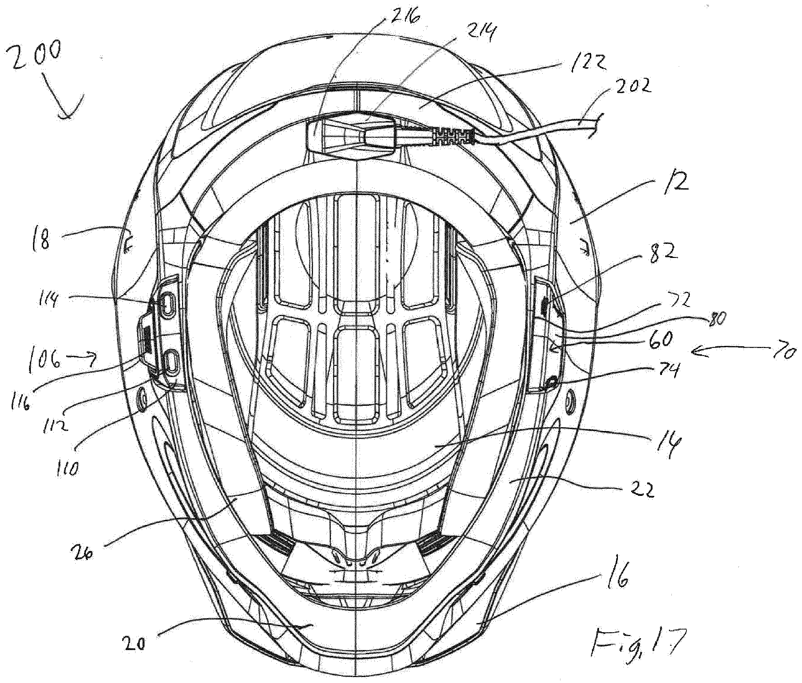

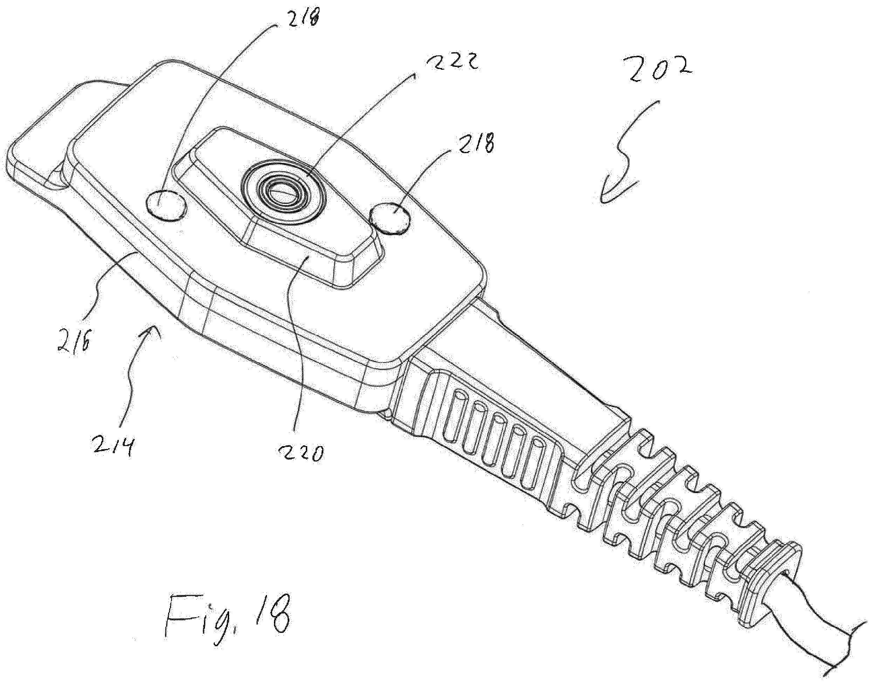

Turning now to Figs. 16 to 18, a helmet 200 and a power cord 202 will be described. The helmet 200 and the power cord 202 are alternative embodiments of the helmet 10 and of the power cord 134 described above. For simplicity, elements of the helmet 200 and the power cord 202 that are the same as or similar to those of the helmet 10 and the power cord 134 have been labeled with the same reference numerals and will not be described again.

In the helmet 200, the electric connector 54 has been replaced by an electric connector 204. The electric connector 204 has a connector chamber 206 defined in the battery housing 122 and a connector aperture 208 opening into the connector chamber 206 and defined in the bottom of the battery housing 122. Alternatively, the connector chamber 206 and the connector aperture 208 could be defined in the bottom trim 22. The connector aperture 208 is generally hexagonal in the present embodiment, although different shapes are contemplated. The electric connector 204 further includes two magnets 210 disposed in a vicinity of the connector aperture 208. One magnet 210 is disposed on one side of the connector aperture 208 and the other magnet 210 disposed on the opposite side of the connector aperture 210, each magnet 210 also being disposed on generally opposite lateral ends of the connector aperture 208. The electric connector 204 also has an electrical contact 212 disposed in the connector chamber 206. The electrical contact 212 is electrically connected to the ECU 56. The electrical contact 212 is adapted for electrically coupling to the power cord 202 for electrically connecting the electric devices of the helmet 200 to the external power source 132.

The power cord 202 includes an electric connector 214 at a one end thereof that is configured for electrically connecting to the electric connector 204. The power cord 202 also includes another electric connector (not shown) at an opposite end thereof for electrically connecting to the external power source 132.

The electric connector 214 has a connector body 216. While the connector body 216 is generally hexagonally shaped, different forms are contemplated. The electric connector 214 has two connector magnets 218 disposed on the connector body 216. The connector magnets 218 are configured and arranged to selectively magnetically connect to the helmet magnets 210.

The connector body 216 has a protrusion 220. The protrusion 220 is shaped and sized to pass through the connector aperture 208 and to extend into the connector chamber 206. In the present embodiment, the protrusion 220 is hexagonal, but other shapes are contemplated. An electrical contact 222 is provided on the protrusion 220. The electrical contact 222 includes positive and negative electrical contact portions (not separately identified). The positive and negative electrical contact portions of the electrical contact 222 are configured to connect to corresponding electrical contact portions of the electrical contact 212 of the electric connector 204.

The electric connector 214 is configured to be selectively secured to the helmet 200 by inserting the protrusion 220 through the aperture 208 so that it extends into the chamber 206 and by aligning the magnets 218 with the magnets 210. As a result, the magnets 210, 218 connect the electric connector 214 on the helmet 10 and the electrical contact 212 is in contact with the electrical contact 222, such that electric power can be supplied from the power cord 202 to the ECU 56 via the electric connector 204.

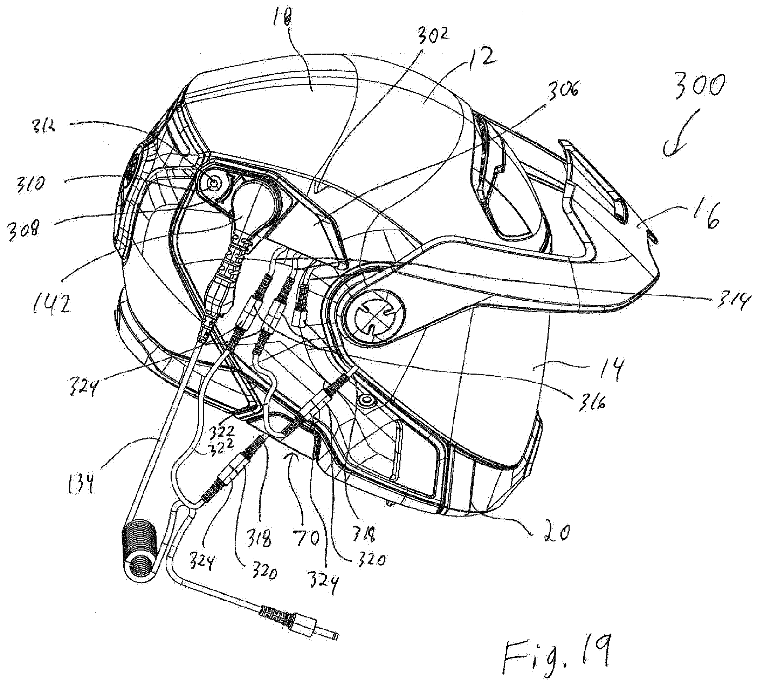

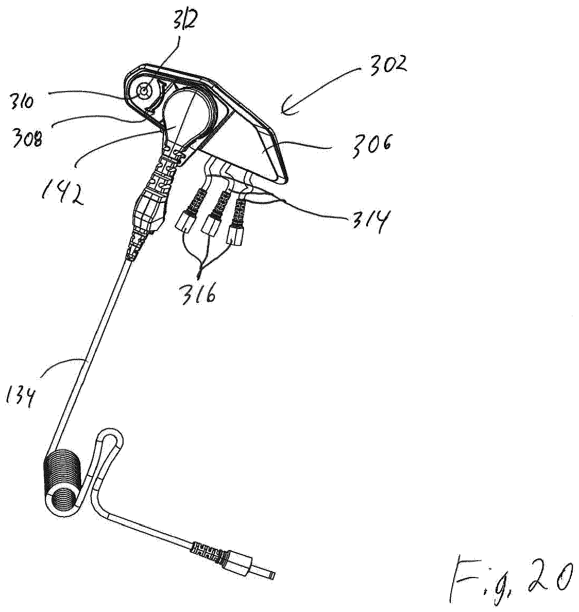

Turning now to Figs. 19 to 21, a helmet 300 will be described. The helmet 300 is an alternative embodiment of the helmet 10 described above. For simplicity, elements of the helmet 300 that are the same as or similar to those of the helmet 10 have been labeled with the same reference numerals and will not be described again.

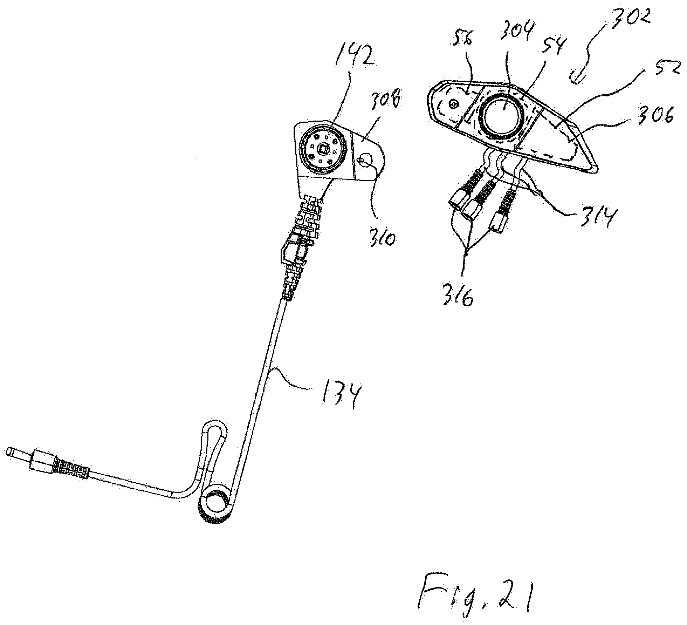

The helmet 300 has a power unit 302 removably connected to a right side of the helmet shell 12. In the present embodiment, the power unit 302 is connected via a magnet 304 (Fig. 21), but it is contemplated that the power unit 302 could be connected the helmet shell 12 by other means allowing the power unit 302 to be removed from the helmet shell 12, such as, but not limited to, hook and loop fasteners or clips. It is contemplated that the power unit 302 could be permanently connected to the helmet shell 12. It is also contemplated that the power unit 302 could be removably or permanently connected to the helmet shell 12 at another position.

The power unit 302 has a housing 306. The battery 52 and the ECU 56 are provided inside the housing 306 (schematically shown in Fig. 21). It is contemplated that the ECU 56 could be omitted. The magnet 304 is connected to a left side of the housing 306. The electric connector 54 (schematically shown in Fig. 21) is connected to a right side of the housing 306.

The electric connector 142 of the power cord 134 is selectively connected to the electric connector 54 of the power unit 302 to supply electric power from an external power source 132 to the electric connector 54. The electric connector 142 has a tab 308 defining an aperture 310. A pin 312 protrudes from the housing 306. The pin 312 is received in the aperture 310 when the electric connector 142 is connected to the electric connector 54 to limit rotation of the electric connector 142 relative to the housing 306.

The power unit 302 also has three electric wire 314 electrically connected to the battery 52 and the electric connector 54 and extending from the housing 306. It is contemplated that the power unit 302 could have more or less than three electric wires 314. Each electric wire 314 has a connector 316. Electric devices provided on the helmet 300 have electric wires 318 having connectors 320. Extension wire 322 having connectors 324 at both ends are used to connect one connector 316 to one connectors 320. Connecting a connector 320 to a connector 316 with a wire 314 supplies electric power to the corresponding electric device from the battery 52 or from the electric connector 54 if the electric connector 54 is electrically connected to an external power source 132, as described above with respect to the helmet 10. In Fig. 19, the light assembly 70 and the visor heater 70 are electrically connected to the power unit 302, and one wire 314 is not connected to an electric device. Should an electric device be added to the helmet 300, such as a rear light 62, this wire 314 could be connected to this added electric device to supply electric power to this electric device. It is contemplated that in some embodiments, one or more of the connectors 316 could be connected to one or more corresponding connector 320 directly without the use of one or more extension wire 322.

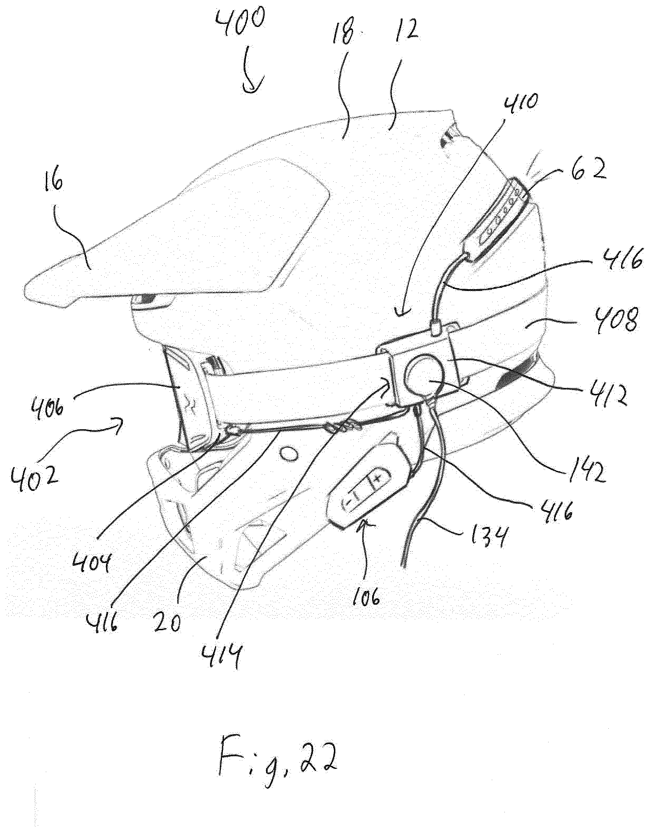

Turning now to Fig. 22, a helmet 400 will be described. The helmet 400 is an alternative embodiment of the helmet 10 described above. For simplicity, elements of the helmet 400 that are the same as or similar to those of the helmet 10 have been labeled with the same reference numerals and will not be described again.

The helmet 400 does not have a visor 14. Instead, the helmet 400 is provided with removable goggles 402. The goggles 402 have a frame 404, a lens 406 mounted to the frame 404, and an elastic band 408 connected to the frame 404. The elastic band 408 is placed around the helmet shell 12 to hold the goggles 402 on the helmet shell 12.

The helmet 400 has a power unit 410 removably connected to the elastic band 408. In the present embodiment, the power unit 410 is on the left side of the elastic band 408, and therefore of the helmet shell 12. It is contemplated that the power unit 410 could be provided at other positions along the elastic band 408.

The power unit 410 has a housing 412. The housing 412 defines a passage 414 through which the elastic band 408 passes. The battery 52 and the ECU 56 (not shown) are provided inside the housing 412. It is contemplated that the ECU 56 could be omitted. The electric connector 54 (not shown, under the connector 142) is connected to an external side of the housing 412. The electric connector 142 of the power cord 134 is selectively connected to the electric connector 54 of the power unit 410 to supply electric power from an external power source 132 to the electric connector 54.

The power unit 410 also has three electric wire 416 electrically connected to the battery 52 and the electric connector 54 and extending from the housing 412. It is contemplated that the power unit 410 could have more or less than three electric wires 416. Electric devices provided on the helmet 400 are connected to the electric wires 416 to supply electric power to the electric devices from the battery 52 or from the electric connector 54 if the electric connector 54 is electrically connected to an external power source 132, as described above with respect to the helmet 10. In Fig. 22, the rear light 62, the visor heater 70, and the multifunction switch assembly 106 are electrically connected to the power unit 410.

Modifications and improvements to the above-described embodiments of the present technology may become apparent to those skilled in the art. The foregoing description is intended to be exemplary rather than limiting. The scope of the present invention is therefore intended to be limited solely by the appended claims.

## Claims

1. A helmet comprising:
a helmet shell;
a battery connected to the helmet shell;
an electric connector connected to the helmet shell; and
at least one electric device electrically connected to the battery and to the electric connector,
in response to the electric connector being electrically connected to an external power source and receiving electric power from the external power source, electric power is supplied to the at least one electric device from the electric connector; and
in response to the electric connector not receiving electric power from the external power source, electric power is supplied to the at least one electric device from the battery.

2. The helmet of claim 1, further comprising a visor connected to the helmet shell; and wherein the at least one electric device comprises a visor heater connected to the visor.

3. The helmet of claim 1 or 2, wherein the at least one electric device comprises a light connected to the helmet shell.

4. The helmet of claim 3, wherein:
the light is pivotally connected to the helmet shell;
the light is pivotable between a stored position and a use position;
in the stored position, the light is off; and
in the use position, the light is on.

5. The helmet of claim 4, further comprising a light switch electrically connected between the light and the electric connector and between the light and the battery; and
wherein:
the light switch is in an off position in response to the light being in the stored position; and
the light switch is in an on position in response to the light being in the use position.

6. The helmet claim 4 or 5, wherein, in the stored position, the light is received in a recess in the helmet shell.

7. The helmet of any one of claims 1 to 6, wherein the electric device comprises a rear light connected to a rear of the helmet shell.

8. The helmet of any one of claims 1 to 7, wherein the electric device comprises a communication system.

9. The helmet of claim 8, wherein:
the communication system further comprises a control unit,
the control unit is electrically connected to the battery and the electric connector, and
the control unit is configured for controlling a supply of electric power to the communication system.

10. The helmet of claim 8 or 9, wherein the communication system further comprises a multi-function switch assembly connected to the helmet shell.

11. The helmet of any one of claims 1 to 10, wherein the battery is located in the rear portion of the helmet shell.

12. The helmet of any one of claims 1 to 11, further comprising a control unit electrically connected to the battery, the electric connector and the at least one electric device;
wherein:
the control unit is configured for controlling a supply of electric power to the at least one electric device; and
in response to the electric connector being electrically connected to the external power source and receiving electric power from the external power source, the electric connector is electrically connected to the battery by the control unit for recharging the battery.

13. The helmet of any one of claims 1 to 12, further comprising a battery housing housing the battery, the battery housing being connected to the helmet shell; and
wherein the battery housing is connected to a lower, rear portion of the helmet shell.

14. The helmet of claim 13, wherein the battery housing comprises a charging port electrically connected to the battery.

15. The helmet of any one of claims 1 to 8, further comprising a control unit electrically connected to the battery, the electric connector and the at least one electric device, the control unit being configured for controlling a supply of electric power to the at least one electric device.
